# EUROPEAN PATENT SPECIFICATION

(11) **EP 0 730 837 B1**
(45) Date of publication and mention of the grant of the patent: **04.12.2002**
(21) Application number: 96103475.8
(22) Date of filing: 29.08.1994
(51) Int. Cl.: A47J 27/16, A23L 1/01

(54) **Method and apparatus for processing food products**
Verfahren und Gerät zum Bearbeiten von Nahrungsmitteln
Méthode et dispositif pour traiter des produits alimentaires

(30) Priority: 02.09.1993 US 116032; 02.09.1993 US 116064; 02.09.1993 US 116114; 02.09.1993 US 116071
(43) Date of publication of application: 11.09.1996
(62) Divisional of application: 94927961.6
(73) Proprietor: Riviana Foods, Inc., Houston, Texas 77019 (US); SATAKE CORPORATION, Higashi, Hiroshima-shi 724 (JP)
(72) Inventor: Kendall, John Hugh, Sugar Land, TX 77478 (US); Mohindra, Ranvir Biki, Houston, TX 77071 (US); Rutherford, Duane Stephen, Houston, TX 77066 (US); Kanamoto, Sigeharu, Hiroshima-ken 723 (JP); Satake, Satoru, Tokyo 143 (JP); Kumamoto, Katsuyuki, Hiroshimaken 723 (JP)
(74) Representative: Frankland, Nigel Howard

(56) References cited:
- EP-A- 0 211 668
- DE-B- 1 149 232
- GB-A- 150 362
- US-A- 4 934 259

## Description

### Background of the Invention

The invention relates to a method and apparatus for processing foodstuffs; more particularly, this invention relates to methods and apparatus for processing rice to achieve a quick-cooking rice.

Mankind is continually searching for new and better methods of cooking cereal grains, vegetables and other foodstuffs. In large scale commercial operations, the cooking of foodstuffs requires special apparatus and specially adapted cooking methods that will provide a uniform and desirable food product while at the same time handling large quantities of foods.

In the cooking of certain starch-containing foods such as vegetables and cereal grains, several problems are encountered. First, the food granules must be moved from storage tanks to processing vessels, and in some cases to holding tanks or cooking vessels, and then they may be distributed to dryers to remove water from the food granules. The physical transport of the food granules during such processing must be well regulated and maintained to achieve a desirable flow of food particles through the processing system from one processing step to another, without undesirable clumping or aggregation of food granules.

In certain cases the physical handling and heat applied to grains during cooking is designed to result in physical or chemical changes to the starch or other molecules that are contained in the food stock itself. For example, in the cooking of cereal grains, such as rice, the goal is to gelatinize the starches in the grain. In such a process, loose starch molecules may be leached out of the food granules or the starch molecules may be ruptured as a result of handling or processing. If that occurs, then cooking processes may tend to glue together the granules, slowing advancement of the food product through the processing system. This "gluing" problem is particularly troublesome in the cooking of rice and, if allowed to proceed unabated, will cause the surface of rice particles to stick together, causing large globules to form, making further transport and processing of the rice impractical, if not impossible.

In the past, the problem of "gluing" of food granules by the release or rupture of starch molecules could be controlled, at least to a limited degree, by using large amounts of fluid in transporting the food through the processing machinery, cookers, conduits, and the like. Typically, water is used as a transport fluid, and large amounts of water tend to dilute the "glue" (free hydrated starch), thereby minimizing the adverse effect of free starch. By using large amounts of water, cereal grains may be processed without the undesirable globules forming to slow the transport of the grains through processing equipment. However, such use of water to dilute this gluing effect results in spent process water with large amounts of free starch which must be discarded or further processed such as by water treatment.

Unfortunately, many communities have greatly increased the fees that commercial users must pay for water in such food processing operations. As such, the processing of food wherein large amounts of water are required has become extremely expensive in these communities, and newer and better methods of transporting and cooking food in a processing system, while using less water, are highly desirable.

Also, in the past, water used in a food processing system for transport of food has been discarded as waste water at the point in the processing after which the water is no longer needed for transport of the food. However, recent environmental regulations have greatly curtailed the amount of waste water and waste materials that may be disposed of by food processing facility. Moreover, many public utilities and water companies charge corporate water consumers not only on the basis of the amount of water consumed, but also on the basis of the number of gallons of waste water that is discharged back into the public sewer system. Therefore, it is desirable to limit the amount of waste water that is produced by a food processing plant.

Additionally, the greater the amount of water used in commercial processing, the greater is the amount of heat energy that must be applied to reach a desirable temperature level. If less water is utilized in a batch processing system, substantial savings in power consumption can be achieved. A batch processing system may, therefore, operate at a lower cost per pound of food processed.

Commercial rice cooking methods consume and excrete very large amounts of water. For example, in the commercial cooking of one cup of rice, prior methods required as much as a 20:1 ratio of water used to rice produced pursuant to the processing method. A great advantage in food processing would be a cooking method that allows food granules, such as rice, to be cooked with a ratio of water consumption to food production of as little as 2:1 or perhaps even less.

Another problem in the food industry is the production of a uniform final product, especially in high production batch or continuous processes. For example, cooking cereal grains in a uniform manner so that each grain receives substantially identical conditions during cooking presents a challenge.

The challenge arises because numerous variables exist in processing and because of the difficulty in exposing each grain to the same overall history of cooking conditions. The first variable is the amount of heat applied. The greater the gelatinization of starch within the grain, and the quicker the rice will cook. Furthermore, an increase in the pressure during the cooking of rice will increase the rate at which the starch is gelatinized, and therefore, it will speed the cooking of the rice. If the rate of gelatinization of the rice is too high, or if the pressure and temperature conditions are not optimum during the cooking and drying of the rice, the individual grains may be physically harmed by the formation of small pockets of air or dead space within the grain itself. These pockets cause the rice to become brittle after it is dried, resulting in an inferior product that consumers find undesirable.

Accordingly, what has been needed in the industry is a cooking apparatus and method that will provide for the uniform cooking of the food granules in a continuous processing system without using or excreting excess water, and while avoiding the gluing together of the food granules.

DE-A-1,149,232 discloses a steam cooker in which a cooking vessel is divided into a plurality of steam zones by horizontal platforms through which steam is supplied. Chutes are provided to transfer material partially cooked on one platform to a lower platform.

According to another aspect of this invention there is provided a steam cooker for cooking food products comprising a steam chamber, wherein the steam chamber comprises a plurality of vertically arranged steam zones, means to provide steam to said plurality of steam zones, and means to releasably form the steam zones within said steam chamber and to support the food products within each of the zones comprising a plurality of partitions defining the steam zones, which partitions rotate about an axis from a cooking position to a flow position, the means to provide steam to the zones providing the steam via said axis the cooking position supporting the food product during cooking within each zone, and the flow position facilitating transfer of the food product from each zone.

Conveniently the plurality of partitions comprise arms supported by a central support structure that rotates about said axis.

In an alternative arrangement the plurality of partitions are orientated substantially horizontally and each partition rotates about a substantially horizontal axis.

Preferably steam flow lines and exit ports are provided along the surface of each partition, such that steam may be supplied to food products while such products are supported on the partitions.

Conveniently said partitions are independently rotatable.

Preferably the partitions are rotatable up to approximately 90° about their respective axes.

Advantageously the means to releasably form the steam zones comprises a rotatable support structure within the steam chamber, comprising rotatable arms which support the food products while the food products are being subjected to steam cooking.

Conveniently each successive steam zone is larger than the immediately preceding zone.

Preferably the apparatus further includes a discharge port at the bottom of the steam cooker.

The invention also provides a method of cooking food products, comprising positioning the food products within a steam chamber having a plurality of vertically arranged rotatable food product support structures, each rotatable about an axis from a cooking position to a flow position, the cooking position supporting the food product during cooking and the flow position facilitating the transfer of the food product from the support structure, steaming the food product by supplying steam via the axis of said support structure, and transferring the food product to a successive rotatable support structure by rotating the support structures about their axes to the flow positron.

Advantageously the rotatable structures define a plurality of steam zones and each successive steam zone is larger than the immediately preceding zone.

The method may further comprise drawing moisture from the food product prior to entering the steam chamber.

The method may comprise entraining the cooked food product away from the steam chamber.

The method may further comprise supplying steram from above the food product.

The method may further comprise supplying steam from below the food product.

The method may further comprise supplying steam from above and below the food product.

In order that the invention may be more readily understood, and so that further features thereof may be appreciated the invention will now be described with reference to the accompanying drawings in which:
Figure 1 is a perspective view of the overall food processing system.
Figure 2 is a flow chart showing the movement of the food granules among the various processing steps of the present invention;
Figure 2A is a perspective view of the preferred embodiment of the steam cooker of the present invention;
Figure 2B provides a cross-sectional view of the preferred steam cooker of the present invention;
Figure 2C provides a detailed view of the shutters contained within the preferred steam cooker of the present invention (the steam cooker disclosed in Figures 2A and 2B);
Figure 3 is a perspective view of a first alternate embodiment of the steam cooker of the present invention;
Figure 4 provides an exploded, detailed view of the interior of the alternate embodiment of the steam cooker shown in Figure 3; and
Figure 5 discloses a cross-section view of the steam cooker shown in Figures 3 and 4.

### Description of the Preferred Embodiment

### The Overall Apparatus and Method

In the preferred embodiment of the present invention, food granules are treated by prewashing, presteaming, steeping and then transferring the food granules to a steam cooker, followed by transfer to one or more drying stages. After drying, the food granules may be packaged for distribution to the consumer. Further, the present invention advantageously utilises water in an economical manner by limiting the total amount of water used in the processing of the food granules, and by limiting the amount of water excreted in the processing of the food granules.

The amount of water used in the present invention of processing rice, for example, is usually the minimum amount of water needed to transmit required moisture and heat to each of the individual rice grains, and to prevent the formation of the excess free starch point, i.e., the "glue" point at which too much free starch is released, thereby causing the rice to accumulate, and to no longer move through the processing steps. This is accomplished by adding water in quantities which are roughly equivalent to the amount that the rice can absorb at each particular point in the process. Therefore, increases in pressure and temperature will allow for smaller amounts of water to be used in processing the cereal grains, while achieving a desired level of gelatinization of the cereal grains without release of excess free starch.

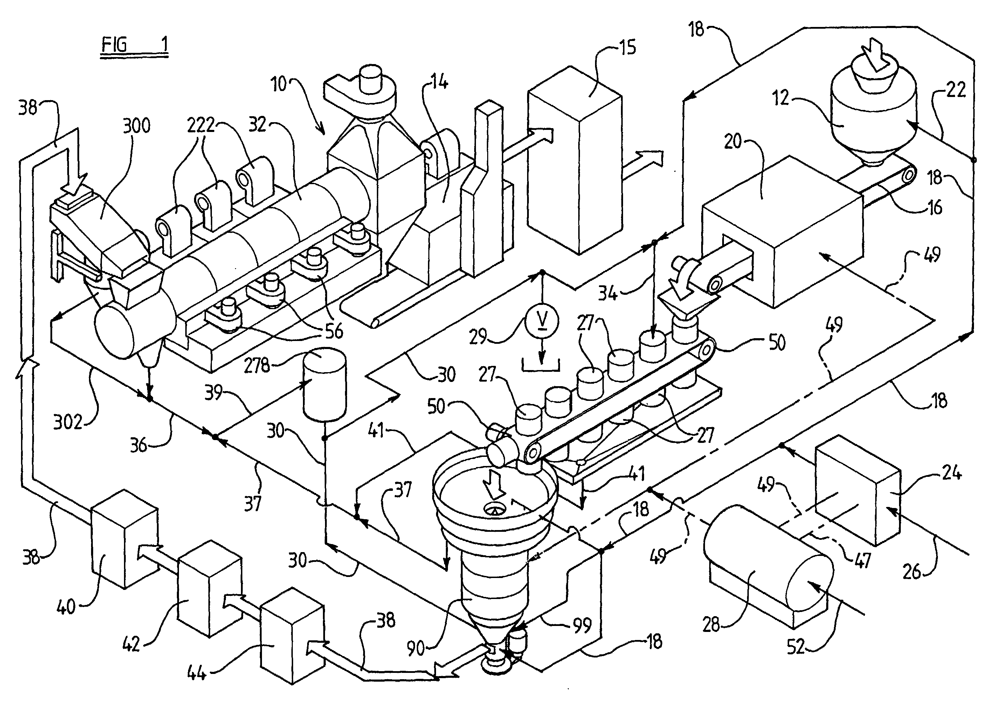

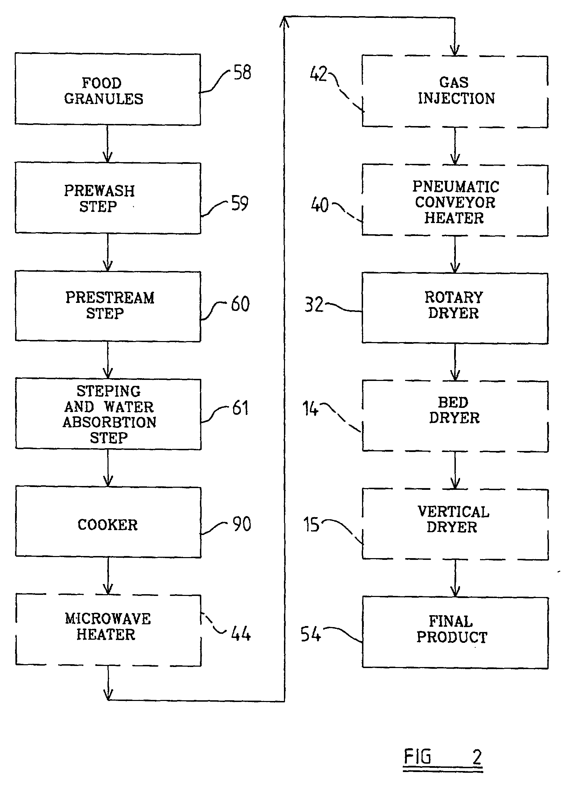

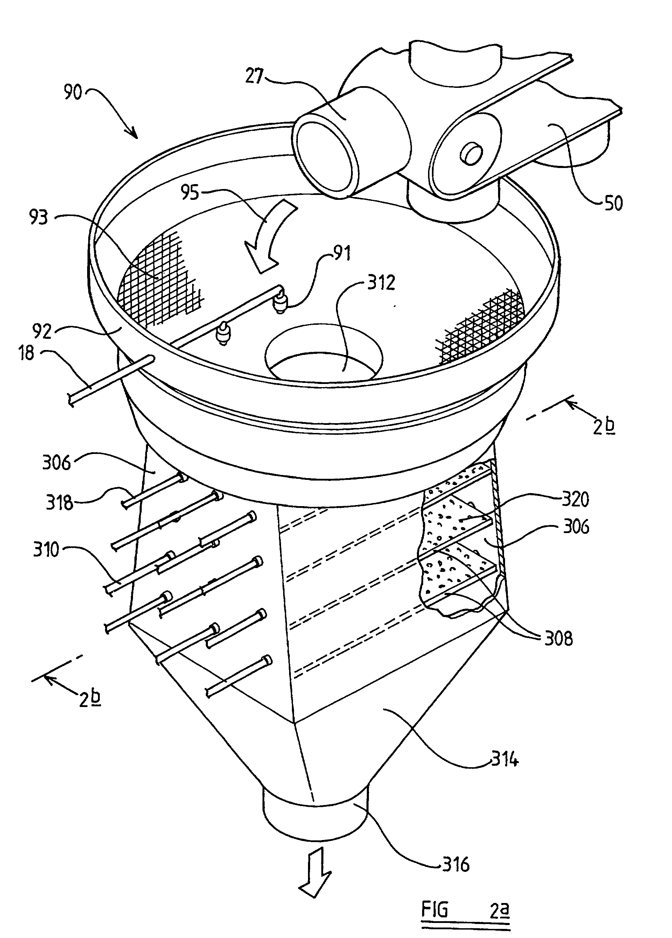

The overall processing system can be seen in FIG. 1. In FIG. 2, a flow diagram depicts an overview of the typical flow of food granules through the processing steps of the present invention. All these steps will be explained in greater detail below, flow diagram is provided as an overview to the process. Food granules 58 are first subjected to a prewash step 59 in apparatus 12 illustrated in FIG. 1. After prewashing, food granules are provided to a presteaming step 60 (shown by reference numeral 20 in FIG. 1), where they are presteamed in preparation for steeping and water absorption step 61 which occurs within moving tanks or buckets 27 (as seen in FIG. 1). Of course, the buckets 27 seen in FIG. 1 are merely schematic, and actual implementation of the conveyor containers may adopt a different appearance from that shown in FIG. 1, while still performing the same function. After steeping, the food granules proceed into steam cooker 90, where they are cooked, and are then provided along conveyor line 38 from the steam cooker to one or more optional stations. As one option, a microwave or radiowave heater 44 may be provided in-line, and a gas injection 42 may be provided to the food granules. Further, an optional pneumatic conveyor heater 40 may apply heat to the food granules.

Upon exiting the cooker and proceeding through conveyor line 38, the food product is preferably entrained in a water slurry, which proceeds into vibratory drainer 300 where water is drained from the slurry. The food granules then enter the rotary dryer 32, where the food granules are dried in various temperature zones. Further, in an optional step the food granules may be provided to a bed dryer 14, or a vertical dryer 15, or both, and the final product 54 (see FIG. 2) is dried and ready for packaging.

Referring back to FIG. 1, food processing system 10 includes prewasher 12 which receives the uncooked food granules, and performs a prewashing step. Input 22 provides water to the prewasher 12 which is preferably ambient temperature at a temperature of approximately 25°C. If desired, the prewasher may be supplied with a hot or cold water input, not shown in FIG. 1. A hot water input might be used in cases where it is desired to optimize free starch or surface starch removed. Prewashing may occur using any of the standard methods of prewashing rice known in the art. The preferred method is the so-called "Jiff-Rice" system, disclosed in Patent Bulletin No. 51-22063 and in Japanese Patent No. 57/141257, which are incorporated by reference.

In general, a Jiff-Rice unit prewashes rice by using a rotating centrifugal water application and separation method. Basically, the rice is washed in water, and the water is thrown off of the rice by centrifugal force,in the turning of a centrifugal drum within the prewasher. In the prewasher 12, rice typically is washed for only about 10 to 60 seconds. If the Jiff-rice process is not being employed, 10 seconds is the preferred time. If the Jiff-Rice system is employed, then the washing time may be as much as 60 seconds or perhaps even more. This prewashing is known in the art pursuant to the above-described patents, and perhaps other patents.

The prewashing serves to provide some moisture to the rice, without giving it too much moisture in the early stages of the process. If rice or other uncooked food granules are given too much water early in the process, undesirable gluing effects will be observed, slowing the transport of the food granules through the cooking apparatus.

After the relatively brief prewashing step, food granules are deposited upon conveyor 16 for transport into the presteamer unit 20, which is supplied with steam from steam line 49. The presteamer is preferably a bed conveyor-type steam unit, of the type known in the art which sprays steam onto the bed of food granules as they pass through the steamer from above the conveyor down onto the conveyor, and also from below the conveyor onto the food granules. The presteaming step is important to the overall invention because the food product is exposed to a relatively brief amount of heat and moisture, in order to avoid damaging or mobilizing surface starch in the early stages of cooking of the food granule. In the preferred method, each individual granule of rice will be subjected to the presteamer operation for approximately 5 to 30 minutes. Of course, this may be modified as desired, and presteaming time will depend upon the variety of the product being produced.

The presteaming step assists food granules, and in particular, assists cereal grains such as rice in absorbing a relatively small, but appropriate, amount of water at this point in the process. This step, therefore, prepares the rice granules to be in a condition for absorbing further quantities of water in appropriate amounts in subsequent steps. In the process of the present invention, one of the most important factors is that the cereal grains are presteamed before they are steeped in the buckets 27 in route to the steam cooker. This process facilitates a controlled moisture input into the food granules or cereal grains that increases the ability of the food particle to be cooked without showing undesirable gluing effects. In particular, the water which is transported along with the cereal grains during cooking is less likely to contain large amounts of loose starch which has been extruded from the cereal grains where a presteaming and a short steeping step are provided, as in the present invention, before steam cooking the rice.

After the food granules pass through the presteamer unit 20, they are deposited into buckets 27 which are intermittently advanced upon conveyor line 50. The prepared conveyor/bucket system is of a commercially available design from Nippanki Industrial Co., Ltd. of Japan. Preferably, approximately 22.65 Kg (50 pounds) of food granules are deposited into each bucket along conveyor line 50. Sensing mechanisms (not shown) detect when the bucket receives a full load of food granules, and at that point the conveyor system advances one station to a point at which the dispenser line mixture 34 dispenses water into the bucket 27, for a steeping step.

The dispenser line mixture 34 may be comprised of fresh hot water which comes from hot water line 18, or may be comprised of recirculated water from recirculated water line 30. Depending upon the type of food granules processed, and the processing conditions required, it may be possible to provide recirculated, or recycle water, from recirculated water line 30, which has already been processed, back into buckets 27 for reabsorption by food granules, thereby minimizing the amount of water used in the overall processing system, and reducing the amount of waste water which is excreted in the overall processing of the food granules.

The amount of water introduced into each bucket 27 is typically the amount of water needed to provide a ratio of about 1:1 between the amount of food granules introduced into the bucket, and the amount of water introduced into the bucket, on a weight basis. In particular, the amount of water introduced is regulated such that it may be completely absorbed, or nearly completely absorbed, by the food granules before they are deposited into the steam cooker 90. The steeping water provided into buckets 27 is preferably about 80°C, although the water temperature will vary for different processing conditions and different food granules. Further, in the processing of rice, different varieties of rice may require a different water temperature for steeping. Each 22.65 Kg (50 pound) charge of food granules which is deposited into bucket 27, and then supplied with water, then proceeds in stepwise fashion towards the steam cooker 90. Preferably the rice will remain in its associated bucket and hot water for approximately 5-30 minutes (depending upon processing conditions and variety of food product). The preferred time for milled white rice is about 10 minutes for appropriate steeping and absorption of the water into the rice granules. Upon reaching the steam cooker, the contents in each bucket are emptied into the steam cooker, and each bucket is returned back to the deposit station along the undercarriage of the conveyor line 50. A bucket cleaning station may be included if needed.

After proceeding through the steam cooker 90, which will be described in more detail in the description that follows, the cooked rice and water slurry emerges along conveyor line 38, where it advances to a vibratory drainer 300, and then to a rotary dryer 32. However, one or more optional steps may occur between the steam cooker and the rotary dryer, including the application of microwaves, radiowaves, or other electromagnetic radiation to the food granules at microwave heater 44. As another option, the food granules may be subjected to a gaseous substance, such as carbon dioxide at gas injection station 42. As another option, depending upon the type of food granules processed, a pneumatic conveyor heater 40 may be provided to flash off excess water prior to entry of the food granules into the rotary dryer 32.

Further, chemical treatments of the rice may be desirable in some cases. The food granules may be conditioned by the addition of lecithin, rice oil, sugar, phosphoric acid, adipic acid or other acids. In the processing of rice, for example, such chemical additives are useful in improving the quality of the final product.

It should be noted that the gas injection and the microwave heating may serve several functions, including drying the surface of the food particles to facilitate the entry of water into the particle, thereby softening the food granule. In the case of rice, for example, microwave heating of the grain produces small fissures in the exterior of the grain, allowing for moisture entrapment within the grain during cooking, providing a highly desirable rice product. Carbon dioxide gas may be provided to cereal grains in order to improve the texture and to aid gelatinization of the starch within the grain for a more consistent cereal grain product that is more evenly cooked and more desirable to consumers. Due to the nature of the functions provided by these steps, they might be performed, either individually or in combination, or at other additional or different points in the overall process.

Upon arriving at rotary dryer 32, the food product is exposed to hot air in a manner to be described in greater detail below. An alternate type burner might also utilize sonic energy to aid drying. The food granules proceed through the rotary dryer, and optionally may proceed into a bed dryer 14. Whether or not a bed dryer is required will depend upon the type of food granule processed, and the degree of drying desired. After drying in the bed dryer, food granules may optionally proceed to a vertical dryer 15. Vertical dryer 15 is adapted for reducing the moisture content of food granules to a greatly reduced level. Both the bed dryer and vertical dryer are of conventional design.

Various aspects of the overall process will now be examined in greater detail.

### The Preferred Embodiment of the Steam Cooker

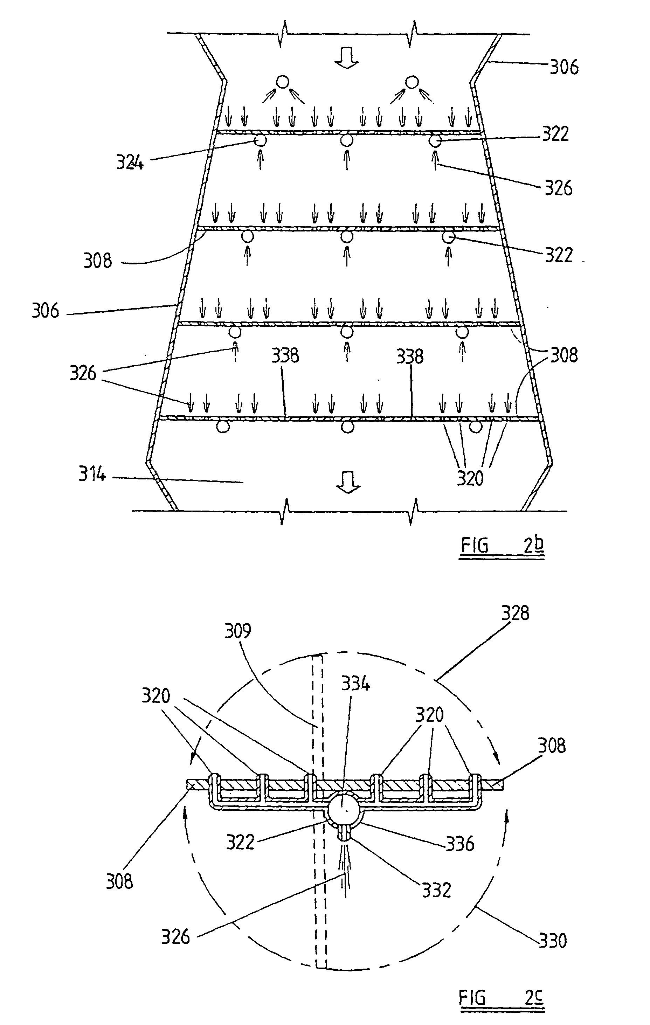

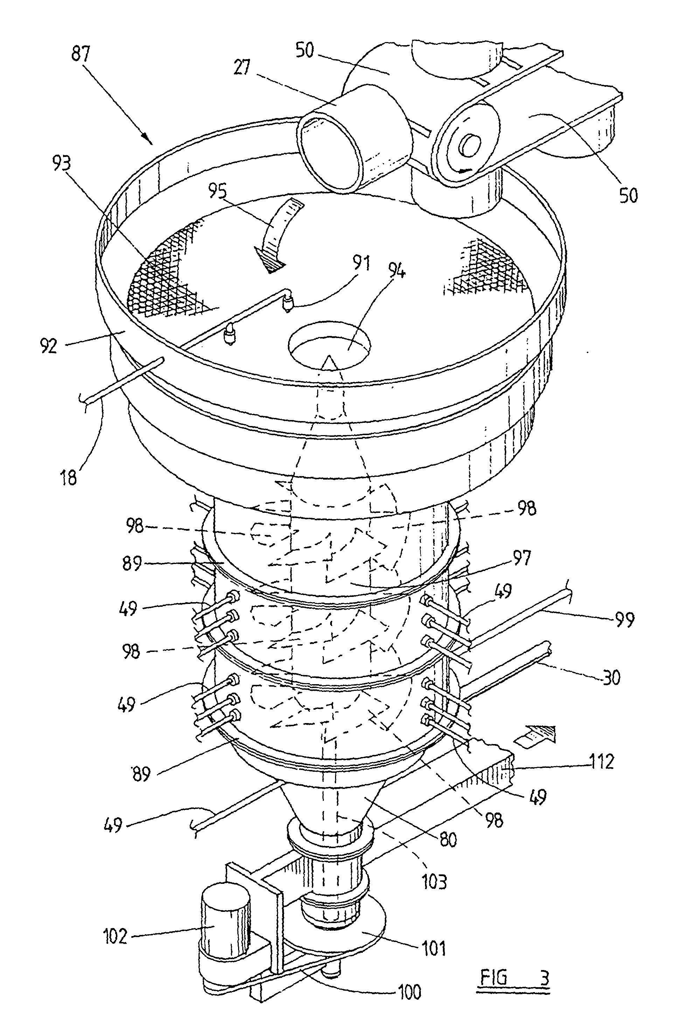

Steam cooker 90, the preferred embodiment for steam cooking in the present invention, is shown in FIG. 2A. The food granules, which have absorbed water just prior to entry into the steam cooker, proceed along conveyor line 50 as seen at the top of FIG. 2A. The food granules, with absorbed water, are deposited from bucket 27 into the top portion of the steam cooker 90. Further, hot water line 18 provides hot water to hot water line 99 to the lower section of the steam cooker 90, and this water may be used to flush the food granule slurry out of the steam cooker, and to provide an aqueous medium of transport of the slurry to the rotary dryer. (See FIGS. 3-5).

Flow direction arrow 95 shows the direction of flow of the uncooked food granules into the steam cooker. A hot water line 18 provides hot water for cleaning jet nozzles 91 which are located in the top portion of the steam cooker 90. The food granules are deposited onto drain screen 93, where they are vibrated, and moisture is allowed to drain from the food granules prior to their passage through steam chamber aperture 312 seen at the top and center portion of FIG. 2A. The circular retention bowl 92 receives the food granules, and directs them downward into the steam chamber aperture 312 with the vibrational action of the drain screen 93.

The food granules proceed through steam chamber aperture 312 into the lower portion of the steamer as seen in FIG. 2A. A plurality of steam lines, for example steam line 318 and 310, are seen entering the steamer wall 306, where they provide steam to the food granules on the interior of the steamer 90. Rotating shutters 308 are seen in cut-away view and in phantom lines at the middle and lower portion of FIG. 2A. The rotating shutters 308 are rectangular in shape, and extend between the side walls of the steamer, and contain steam ports 320 upon their upper surface. Food granules proceed through the various stages, or layers, of rotating shutters in stepwise fashion, where they eventually are released into hopper 314, seen at the lower portion of FIG. 2A. The hopper is typically a water filled bath which cools the food granules, and provides a slurry medium in which food granules proceed prior to advancement through exit chute 316 out of the steam cooker 90. Water lines, gas lines or vacuum lines may be provided in the region of the exit chute 316 to facilitate the discharge of food products from the cooker. Such equipment is more fully discussed in connection with the embodiment of FIGS. 3-5, but could preferably be employed in this embodiment as well.

FIG. 2B shows a cross-section of the lower portion of the steam cooker previously described in FIG. 2A. At the top of FIG. 2B, the steamer wall 306 is seen on either side of the figure, with four vertically spaced layers, or rows, of rotating shutters 308 extending laterally between steamer walls 306. FIG. 2B shows the preferred embodiment of the invention, that is, a series of rotating shutters 308 to advance the food granules from one stage to the next in sequence. Further, it may be seen that the lower portion of the cooking apparatus seen in FIG. 2B is somewhat wider than the upper portion, allowing for greater throughput of the food granules, with maximum cooking effectiveness and minimum adverse "gluing" effects, and also to allow for swelling of the food product, such as rice, due to the absorption of water. Perforated steam lines 324 are seen in cross-section in FIG. 2B, where they proceed laterally beneath rotating shutters 308. The perforated steam lines serve two functions. First, they provide steam for the cooking of the food granules. Second, they provides axes or hinges of rotation for the rotating shutters 308. Shutter gap space 338 is the operating gap between rotating shutters 308, and it facilitates free rotation of the shutters, while still retaining food granules within each layer of the steam cooker. FIG. 2C, which is discussed in more detail below, shows the rotated position of the shutter 309 seen in phantom lines in FIG. 2C. Each of the shutters seen in FIG. 2B functions by rotating as shown in FIG. 2C.

Perforated steam lines 322 and 324 in FIG. 2B provide steam to cook food granules. Further, steam jet 326 extends downwardly and somewhat laterally from the perforated steam lines, and steam ports 320 are evident on the top side or upper side of each rotating shutter 308, to provide steam upward into the food granules. In this way, each charge of food granules is steamed from above and below as it proceeds in stepwise fashion through the steam cooker.

FIG. 2C shows a closeup view of one rotating shutter 308 and its associated perforated steam line 322. In particular, it may be seen that steam ports 320 exist upon the upper side of the rotating shutter 308, and steam is allowed to exit these ports. Steam conduit 334 carries steam through the center of the perforated steam line 322. Outer steam line wall 336 serves as a pivot point, or hinge, upon which the rotating shutter 308 may turn on its axis approximately 90°. The rotated position of the shutter 309 is seen in the phantom lines extending from the top to the bottom of FIG. 2C. Steam conduit 334 carries the steam from the exterior of the steam cooker to the steam jet nozzle 322 and the steam ports 320. Steam jet 326 is seen as it exits from the steam jet nozzle 332. The axis of rotation of rotating shutter 308 is shown by arrows at axis 328 and axis 330.

In the operation of the steamer seen at FIGS. 2A-2C, rice falls through aperture 312 and comes to rest on top of the uppermost row of closed shutters 308. While in this position, steam is provided to the rice for an appropriate duration of time from steam ports 320 and 322. The shutters will then be rotated to cause the rice to fall and be collected on the immediately adjacent vertically spaced row of closed shutters, where the rice will be subjected to further steam and cooking. The rice will then proceed through the cooker onto each immediately adjacent row of shutters for being subjected to further steam, until the rice has achieved the appropriate degree of cooking and moisture absorption.

The preferred operation is to rotate the rotating shutters by external activation approximately once per minute to minute and a half in the case of white rice. Other types of rice would use other processing conditions, and might require a longer or shorter period of time between actuation of the rotating shutters. Once actuated, the rotating shutters would rotate from a few degrees to as much as 90°, as necessary to facilitate the movement of the food granules from one stage (zone) down to the next zone. In actual practice, the steamer preferably would have approximately 10 zones, upon which food granules would proceed in stepwise fashion through rotating shutters. For illustrative purposes, only approximately four or five zones are shown in FIGS. 2A-2C. Different types of food granules and different varieties of rice might require a different number of zones, and as few as two or three zones, or less, might be required for certain applications, while as many as 30 zones might be desirable in other applications.

The actuating method for the rotating shutters may be accomplished by using a motor, hydraulic equipment, or perhaps pneumatic air equipment. The total residence time of rice in the steamer is approximately 5 to 30 minutes, in the case of long grain white rice. It is less or more for other varieties of rice, and for other varieties of food granules. The residence time for short grain rice (i.e., faster hydrating rices) is likely to be less, while the residence time for slower hydrating rices, such as parboiled and brown, and wild rice is likely to be greater. In the case of long grain white rice, the weight of rice to be held by each rotating shutter in each stage (preferably) is approximately 2.8 kilograms. Further, the thickness of the rice layer, in the case of long grain white rice, would preferably be approximately five centimeters. In order to secure the dropping of rice by turning the rotating shutters, the thickness of the rice upon the top of each rotating shutter would preferably be smaller than the rotating radius of the rotating shutter 308, to facilitate the movement of rice from one zone down to the next zone. In some applications, it may be desirable to feed rice or food granules out of the steam cooker and directly into a rotary dryer. However, in the preferred embodiment, and as seen in FIG. 1, it is believed that pumping the rice from the steam cooker in the form of a slurry, into a vibratory drainer 300, and then into the rotary dryer is the most efficient method for the processing of rice. The processing of food granules, and different varieties of rice, may occur by different methods.

In the preferred operation, the pressure within the cooker will be kept below 103 kN/m² (15 psi) in order to avoid high pressure regulations which are imposed upon such high pressure vessels. As the rice exits the cooker, its water content will be approximately 50%-65% water. These general conditions will apply not only to this preferred embodiment, but also the other embodiments of cookers as well.

### Alternative Embodiments of the Steam Cooker Using a Central Rotating Mechanism

FIG. 3 shows an alternate embodiment for the steam cooker of the present invention. In FIG. 3, steam cooker 87 is shown, and the food granules, which have absorbed water just prior to entry into the steam cooker, proceed along conveyor line 50 as seen at the top of FIG. 3. In this alternate embodiment, the food granules, with absorbed water, are dumped from bucket 27 into the top portion of the steam cooker 87. Flow direction arrow 95 again shows the direction of flow of the uncooked food granules into the steam cooker. A hot water line 18 provides hot water for cleaning jet nozzles 91 which are located in the top portion of the steam cooker 87, and also provides hot water to hot water line 99. The food granules are deposited onto drain screen 93, where they are vibrated, and moisture is allowed to drain from the food granules prior to their passage through food granule inlet 94, which is seen at the top and center portion of FIG. 3. The large circular retention bowl 92 receives the food granules, and it directs them downward into the food granule inlet 94 with the vibrational action of the drain screen 93.

Different processing conditions and different types of food granules will determine what type of steam cooker is most desirable for each application. For example, the preferred embodiment of the present invention is the steam cooker shown in FIGS. 2A-2C, and it is preferred for long grain white rice. Nevertheless, short grain rice or other varieties of rice, such as parboiled rice, may be more advantageously cooked using the rotating mechanism of the steam cooker shown in FIGS. 3-5.

Each of the steam cookers shown in this specification is contemplated as part of this invention, and different varieties of food granules will preferably use different variations of the steam cooker.

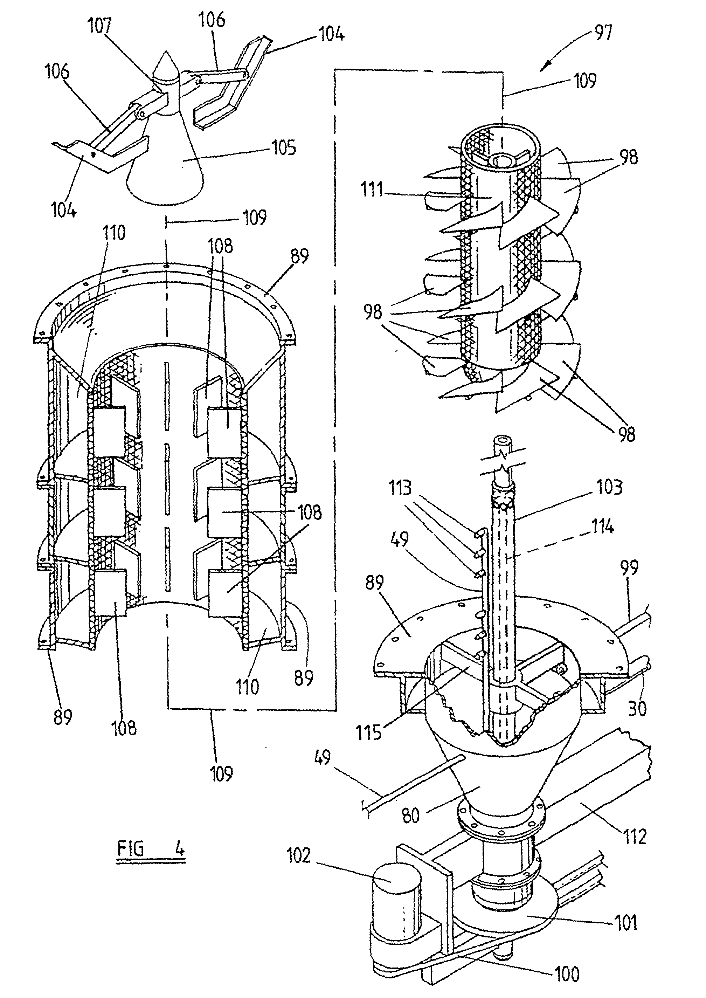

Food granules are deposited into the housing 89 which contains the propeller assembly 97 (the cylindrical dotted portion seen at the center of FIG. 3). The propeller assembly 97 comprises several parts, which will be seen in the exploded and detailed view of FIG. 4.

Steam lines 49 provide steam to the exterior wall of housing 89 as seen in FIG. 3. Further, rotary blades 98 are seen in phantom lines at the center of FIG. 3, as part of the propeller assembly 97. Hot water line 99 provides hot water to the hopper 80, which may be used to flush the food granule slurry from the hopper, and to provide a water transport means to the rotary dryer Recirculated water line 30 also extends into the housing 89.

At the lower portion of FIG. 3, steam line 49 is seen entering the housing, and hot water line 96 provides hot water to the lower portion of the steam cooker comprising the hopper 80. At the lower portion of FIG. 3, in phantom, can be seen the rotating crank shaft 103. The rotating crank shaft 103 is connected to the propeller assembly 97, and it rotates, causing the rotation of the rotary blades 98.

During operation of the steam cooker, the rotary blades 98 act to propel the food granules from the top of the cooker down to the bottom of the cooker. The blades also support the food granules, and provide a uniform mixture of food granules while the granules are being steamed in the steam cooker. Further, the rotating action provided by rotating crank shaft 103 assists in preventing the gluing and sticking together of the food granules, which may otherwise occur.

Support frame 112 supports the steam cooker, and power is provided to the rotating crank shaft 103 by way of motor 102, which is connected to a belt 100 wrapped around a pulley 101.

In FIG. 4, an exploded and detailed view of the propeller assembly 97 is provided. The central axis 109 of the propeller assembly is seen as dotted lines. FIG. 4 also shows a rotating scraper cap 105 upon which is mounted an optional scraper connecting unit 107, only part of which is shown in FIG. 3. The scraper connecting unit 107 is connected to two separate scraper arms 106, which in turn are connected to scrapers 104. The rotating scraper cap 105 is fixedly connected to the rotating crank shaft 103 which extends up through the entire assembly as shown in FIG. 4. The scrapers rotate to effect a uniform distribution of the food granules as they enter the interior of the steam cooker 90.

At the center and left portion of FIG. 4, the housing 89 is seen in cut-away view whereby the stationary blades 108 may be seen on the interior wall of the housing 89. Twelve stationary blades are shown on the cut-away section, which comprises approximately one-half of the entire housing 89. Steam chamber 110 may be seen on the exterior periphery, and it is within the steam chamber 110 that steam is injected by way of steam lines 49 and then distributed inward through porous wall 123. Porous wall 123 may be formed, for example, by a cylindrically shaped portion of steel or aluminum mesh.

Further, in FIG. 4, the rotating cylinder 111, which is connected to the rotating crank shaft 103 is seen at the top right portion of FIG. 4. It rotates within the housing 89, and comprises a plurality of rotary blades 98 which are arranged in three distinct zones along the longitudinal length of the rotating cylinder 111. The rotary blades 98 assist in advancing the food granules through the cooking apparatus, and also provide a platform upon which the food granule slurry may rest, to prevent the pressure of the slurry from becoming so great that large globules are formed within the chamber. Thus, rotary blades 98 and stationary blades 108 help to keep the food granule slurry both supported and mixed, to prevent globular portions from forming within the steam cooker 90.

The rotating cylinder 111 is mounted upon the rotating crank shaft 103 which extends along the central axis 109 up through the rotating cylinder 111 where it engages the rotating scraper cap 105.

Steam water mist line 114 extends up through the interior of the rotating crank shaft 103 to provide a mixture of steam and water mist to the food granule slurry. Further, steam line 49 is provided with a plurality of steam nozzles 113 which are located along the interior of rotating cylinder 111, and provide jets of steam from the interior through the wall of the rotating cylinder 111 and out into the chamber where the food granules are contained. Like exterior wall 123, rotating cylinder 111 is porous to permit the passage of steam. Thus, the food granules receive steam from two directions, from steam chamber 110 from the outside, and from the inside by way of steam nozzles 113, in order to achieve more uniform cooking and water absorption.

At the lower right portion of FIG. 4, one can see housing 89 which is shown in a cut-away view, and hot water line 99 extends out from the housing. Recirculated water line 30 drains excess water from the interior of the steam chamber and, as seen in FIG. 1, provides recirculated water for reabsorption along dispenser line mixture 34 back into buckets 27. In this way, less water is utilized in cooking, and more water is retained within the processing system.

Spoke 115 provides a structural member supporting the steam cooker, and a hopper 80 essentially comprises a water bath near the lower portion of the steam cooker upon which the rice falls after it is cooked. Steam line 49 enters the steam chamber through the wall of hopper 80. Hot water line 99 also provides hot water, if needed, to the hopper 80. In some cases, a hot water flush may be desirable to flush globules of food granules out of the hopper 80, and into conveyor line 38 for transfer to the rotary dryer 32. Power is provided to the rotating crank shaft 10 by way of motor 102, which is connected to belt 100, wrapped around pulley 101.

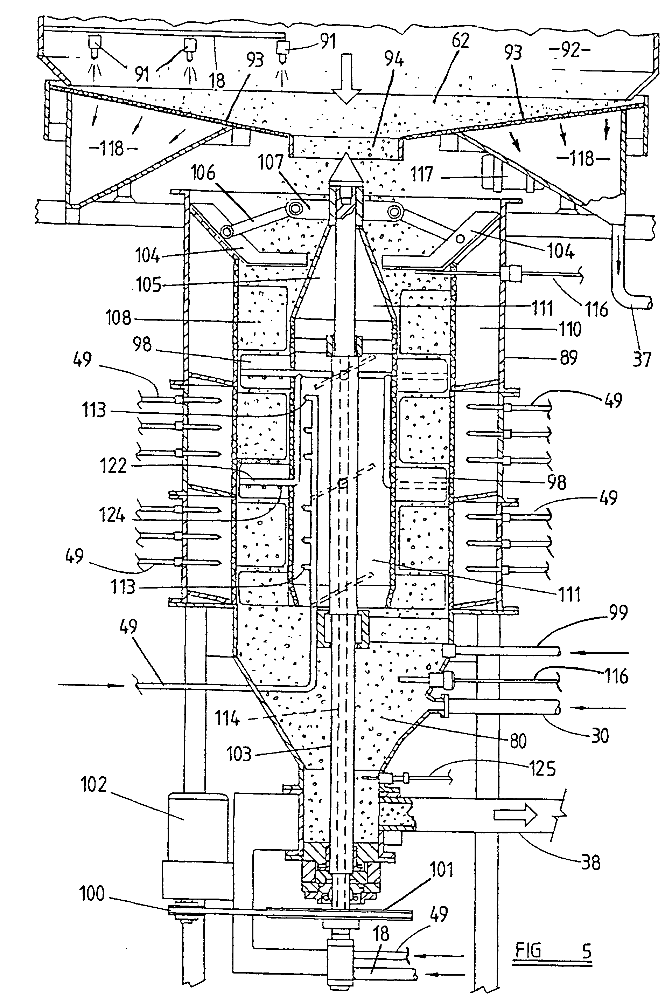

FIG. 5 depicts a cross-section of the steam cooker shown in FIGS. 3 and 4. At the top of FIG. 5, uncooked food granules 62 are dumped into the retention bowl 92, where they are vibrated upon drain screen 93. Hot water line 18 is seen at the top of the retention bowl 92, where it provides a plurality of cleaning jet nozzles 91 that may be used to clean the screen or to provide a hot water spray upon the food granules if desired.

Vibration of the drain screen 93 is provided by vibratory motor 117, which provides vibrating action for the entire drain screen. Water is drained into drain space 118 around the periphery of the food granule inlet 94, and the water is collected and drained away through streamer drain line 37. As seen in FIG. 1, the contents of steamer drain line 37 is later filtered, and some portion of that water may be reused and reabsorbed along the dispenser line mixture 34 into bucket 27 (see Fig. 1). Also, some portion of this recirculated water may be drained at drain 29 as seen in FIG. 1.

FIG. 5 illustrates the manner in which the food granules proceed through the food granule inlet 94 as indicated by the arrow at the top. The granules are dispersed, and fall upon the rotary scraper cap 105, wherein scrapers 104 rotate in distributing the food granules, and helping to feed them into the steam cooker. Scraper connecting unit 107 is seen as it forms its connection between rotating scraper cap 105 and scrapers 104.

The food granules then proceed into the steam cooker in a continuous batch, and they are mixed and distributed with the assistance of stationary blades 108, which do not move, and rotary blades 98, which are rotated in three discrete zones as seen in FIG. 5, around the periphery of the rotating cylinder 111. The rotary blades contain on their underside a steam line 122, from which steam nozzles 124 provide steam to the food granules within the chamber. These steam lines 122 receive steam from water mist line 14.

Rotating crank shaft 103 rotates the rotating blades 98 at a relatively low rate of speed, in the range of 1 rpm to 10 rpm and preferably about 5 rpm. Care should be taken not to agitate the granules to any significant degree, so as to avoid breakage of the individual kernels. As a result, the rice proceeds through the cooking chamber, being steamed from the exterior by a plurality of steam jets around the circumference of the cooker, which are contained within steam chamber 110. Steam lines 49 are seen as they enter from the exterior of the steam cooker into the interior space of steam chamber 110.

Hot water line 99 is seen on the right side of FIG. 5, and level sensor 116 is slightly below hot water line 99. Below that can be seen recirculated water line 30, which may drain off excess water from the hopper 80 and provide it to be recirculated and perhaps reabsorbed in buckets 27 as seen in FIG. 1. Sensor 125 is seen below recirculated water line 30, and it operates to sense the temperature of the water to prevent the water temperature from becoming too great. This sensor may assist in minimizing starch damage and gluing effects.

As shown in FIG. 5, hopper 80 is seen as the portion of the steam cooker wherein the rice falls after it is thoroughly mixed and cooked. Steam line 49 is seen at the lower left portion of FIG. 5, and hot water line 96 is provided in the region of the hopper 80 to facilitate a hot water flush, if desired.

Motor 102 provides power generated by way of belt 100, which drives pulley 101, thus turning the rotating crank shaft 103. Steam line 49 and hot water line 18 are seen at the very bottom of FIG. 5, where they enter the region of the crank shaft 103 and proceed upward as seen in the dotted phantom lines along the interior of the crank shaft 103. The steam water mist line 114, which provides a steam water mist to the food granules within the chamber, may be adjusted to provide the desired mixture of water and steam which is necessary for cooking the particular variety of food granule. Some food granules may require more water and less steam, while others require more steam and less water to fully cook the granules prior to exit from the steam chamber.

In the preferred operation, rice will remain within the cooker 90 for approximately 10 to 15 minutes, approximately the same amount of residence time as in the steeping operation. Thus, the steeping and cooking operations may be coordinated. While the rice is in the cooker, it will continue to absorb water in an optimal manner, i.e., in an amount roughly equivalent to the amount of water that can be absorbed by the granules at that point in the process, and the starches are gelatinized. The temperature and pressure within the cooker will be coordinated to achieve optimal results for cooking the rice while avoiding undesirable "gluing" or sticking.

### Further Alternate Embodiments of the Steam Cooker

In general, it should be noted that numerous embodiments of steam cookers may be used in the present invention. Different arrangements of the cooker will be preferred for different types of food granules, and different varieties of cereal grains or different varieties of rice may require variations in the design of the steam cooker to maximize cooking effectiveness.

Typically, only a small amount of pressure is achieved within the steam chamber of the preferred embodiment shown in Figures 2A - 2C, and the alternate embodiment seen in Figures 3-5; the pressure is preferably maintained below 103 kN/m² (15 psi) to avoid the necessity for complying with governmental regulations and local codes for pressurized vessels. This, of course, is only preferable and may be modified as desired or needed. The pressure is maintained by the downward force of the rice within the vessel and by the introduction of steam under pressure into cooking chambers.

## Claims

1. A steam cooker for cooking food products (90, 87, 46) comprising a steam chamber, wherein the steam chamber comprises a plurality of vertically arranged steam zones, means to provide steam to said plurality of steam zones (322, 324, 114, 138, 140) and means to releasably form the steam zones within said steam chamber and to support the food products within each of the zones comprising a plurality of partitions (308, 98, 143) defining the steam zones, which partitions rotate about an axis (322, 324, 103, 138, 140) from a cooking position to a flow position, the means to provide steam to the zones providing the steam via said axis the cooking position supporting the food product during cooking within each zone, and the flow position facilitating transfer of the food product from each zone.

2. The steam cooker of Claim 1 wherein the plurality of partitions comprise arms (98) supported by a central support structure (97) that rotates about said axis.

3. The steam cooker of Claim 1 wherein the plurality of partitions (308) are orientated substantially horizontally and each partition rotates about a substantially horizontal axis (322, 324).

4. The steam cooker of any one of Claims 1 to 4 wherein steam flow lines (322) and exit ports (320, 326) are provided along the surface of each partition (308), such that steam may be supplied to food products while such products are supported on the partitions.

5. The steam cooker of any one of Claims 1 to 4 wherein said partitions (308) are independently rotatable.

6. The steam cooker of any one of the preceding Claims, wherein the partitions (308) are rotatable up to approximately 90° about their respective axes.

7. The steam cooker of Claim 1 wherein the means to releasably form the steam zones comprises a rotatable support structure within the steam chamber, comprising rotatable arms which support the food products while the food products are being subjected to steam cooking.

8. The steam cooker of any one of the preceding Claims, wherein each successive steam zone is larger than the immediately preceding zone.

9. The steam cooker of any one of the preceding Claims, further including a discharge port (316) at the bottom of the steam cooker.

10. A method for steam cooking food products, comprising positioning the food products within a steam chamber having a plurality of vertically arranged rotatable food product support structures each rotatable about an axis from a cooking position to a flow position, the cooking position supporting the food product during cooking and the flow position facilitating transfer of the food product from the support structure, steaming the food product by supplying steam via the axis of said support structure, and transferring the food product to a successive rotatable support structure by rotating the support structures about their axes to the flow position.

11. The method of Claim 10 wherein the rotatable support structure define a plurality of steam zones and each successive steam zone is larger than the immediately preceding zone.

12. The method of any one of Claims 10 or 11 further comprising draining moisture from the food product prior to entering the steam chamber.

13. The method of any of Claims 10 to 12 further comprising entraining the cooked food product away from the steam chamber.

14. The method of any of Claims 10 to 13 further comprising supplying steam from above the food product.

15. The method of any of Claims 10 to 14 further comprising supplying steam from below the food product.

16. The method of Claim 15 comprising supplying steam from above and below the food product.

17. The method of claim 10 wherein the rotatable food support structure comprises a horizontally oriented shutter (308).

18. The method of claim 10 wherein the rotatable food support structure is a vertically oriented propeller assembly ( 97) having rotary blades (98).

## Patentansprüche

1. Eine Dampfgarapparatur zum Garen von Nahrungsmittelprodukten (90, 87, 46), umfassend
eine Bedampfungskammer, wobei die Bedampfungskammer eine Mehrzahl an vertikal angeordneten Bedampfungszonen, Mittel, um besagte Mehrzahl an Bedampfungszonen (322, 324, 114, 138, 140) mit Dampf zu versorgen, und Mittel, um die Bedampfungszonen innerhalb besagter Bedampfungskammer auf lösbare Art zu bilden und um die Nahrungsmittelprodukte innerhalb jeder der Zonen, umfassend eine Mehrzahl an Verschlüssen (308, 98, 143), die Dampfzonen definierend, zu tragen, wobei die Verschlüsse um eine Achse (322, 324, 103, 138, 140) von einer Garposition zu einer Fließposition rotieren, das Mittel, um die Zonen mit Dampf zu versorgen, liefert den Dampf via besagter Achse, wobei die Garposition das Nahrungsmittelprodukt während des Garens innerhalb jeder Zone unterstützt und die Fließposition den Transfer des Nahrungsmittelprodukts aus jeder Zone erleichtert.

2. Die Dampfgarapparatur gemäß Anspruch 1,
worin die Mehrzahl der Verschlüsse Arme (98) umfaßt, die von einer zentralen Trägerstruktur (97), welche um besagte Achse rotiert, getragen werden.

3. Die Dampfgarapparatur gemäß Anspruch 1,
worin die Mehrzahl der Verschlüsse (308) im wesentlichen horizontal ausgerichtet sind und wobei jeder Verschluß um eine im wesentlichen horizontale Achse (322, 324) rotiert.

4. Die Dampfgarapparatur gemäß einem der Ansprüche 1 bis 3,
worin Dampfleitungen (322) und Dampföffnungen (320, 326) entlang der Oberfläche von jedem Verschluß (308) zur Verfügung gestellt werden, so daß Dampf auf Nahrungsmittelprodukte angewendet werden kann, während diese Produkte von den Verschlüssen getragen werden.

5. Die Dampfgarapparatur gemäß einem der Ansprüche 1 bis 3,
worin besagte Verschlüsse (308) unabhängig rotierbar sind.

6. Die Dampfgarapparatur nach einem der vorangehenden Ansprüche,
worin die Verschlüsse (308) um bis zu ungefähr 90° um ihre jeweiligen Achsen drehbar sind.

7. Die Dampfgarapparatur gemäß Anspruch 1,
worin das Mittel, um auf lösbare Weise die Dampfzonen zu bilden, eine rotierbare Trägerstruktur innerhalb der Dampfkammer umfaßt, umfassend rotierbare Arme, die die Nahrungsmittelprodukte tragen, während die Nahrungsmittelprodukte dem Dampfgaren ausgesetzt werden.

8. Die Dampfgarapparatur nach einem der vorhergehenden Ansprüche,
worin jede aufeinanderfolgende Bedampfungszone größer ist als die unmittelbar vorhergehende Zone.

9. Die Dampfgarapparatur nach einem der vorangehenden Ansprüche,
weiterhin beinhaltend einen Austrittsanschluß (316) am Boden der Dampfgarapparatur.

10. Ein Verfahren zum Dampfgaren von Nahrungsmittelprodukten, umfassend die Plazierung der Nahrungsmittelprodukte in einer Bedampfungskammer, die eine Mehrzahl an vertikal ausgerichteten rotierbaren Nahrungsmittelträgerstrukturen besitzt, jede rotierbar um eine Achse von einer Garposition zu einer Fließposition, wobei die Garposition das Nahrungsmittelprodukt während des Garens trägt und die Fließposition den Transfer des Nahrungsmittelproduktes von der Trägerstruktur erleichtert; das Bedampfen des Nahrungsmittelproduktes durch Liefern von Dampf via die Achse besagter Trägerstruktur; und den Transfer des Nahrungsmittelprodukts zu einer nachfolgenden rotierbaren Trägerstruktur durch Rotation der Trägerstrukturen um ihre Achsen in die Fließposition.

11. Das Verfahren nach Anspruch 10,
worin die rotierbare Trägerstruktur eine Mehrzahl an Bedampfungszonen definiert und jede aufeinanderfolgende Bedampfungszone größer ist als die unmittelbar vorhergehende Zone.

12. Das Verfahren nach einem der Ansprüche 10 oder 11, weiterhin umfassend
das Abtropfen von Feuchtigkeit von dem Nahrungsmittelprodukt vor dem Einlaß in die Bedampfungskammer.

13. Das Verfahren nach einem der Ansprüche 10 bis 12, weiterhin umfassend
das Verbringen des gegarten Nahrungsmittelprodukts weg von der Bedampfungskammer.

14. Das Verfahren nach einem der Ansprüche 10 bis 13, weiterhin umfassend
die Dampfversorgung des Nahrungsmittelprodukts von oben.

15. Das Verfahren nach einem der Ansprüche 10 bis 14, weiterhin umfassend
die Dampfversorgung des Nahrungsmittelprodukts von unten.

16. Das Verfahren nach Anspruch 15, umfassend
die Dampfversorgung des Nahrungsmittelprodukts von oben und von unten.

17. Das Verfahren nach Anspruch 10,
worin die rotierbare Nahrungsmittelträgerstruktur einen horizontal ausgerichteten Verschluß (308) umfaßt.

18. Das Verfahren nach Anspruch 10,
worin die rotierbare Nahrungsmittelträgerstruktur eine vertikal ausgerichtete Propelleranordnung (97) darstellt, die Rotationsschaufeln (98) besitzt.

## Revendications

1. Cuiseur à vapeur pour la cuisson de produits alimentaires (90, 87, 46) comprenant une chambre à vapeur, dans lequel la chambre à vapeur comprend une pluralité de zones de vapeur agencées verticalement, des moyens pour fournir de la vapeur à ladite pluralité de zones de vapeur (322, 324, 114, 138, 140), et des moyens pour former, de façon à pouvoir se dégager, les zones de vapeur à l'intérieur de ladite chambre à vapeur et pour supporter les produits alimentaires dans chacune des zones, comprenant une pluralité de cloisons (308, 98, 143) définissant les zones de vapeur, lesdites cloisons étant en rotation autour d'un axe (322, 324, 103, 138, 140) depuis une position de cuisson vers une position d'écoulement, les moyens destinés à fournir la vapeur vers les zones fournissant ladite vapeur via ledit axe, la position de cuisson supportant les produits alimentaires pendant la cuisson à l'intérieur de chaque zone, et la position d'écoulement facilitant le transfert des produits alimentaires depuis chaque zone.

2. Cuiseur à vapeur selon la revendication 1, dans lequel la pluralité de cloisons comprend des bras (98) supportés par une structure de support centrale (97) qui tourne autour dudit axe.

3. Cuiseur à vapeur selon la revendication 1, dans lequel la pluralité de cloisons (308) sont orientées sensiblement horizontalement, et chaque cloison tourne autour d'un axe sensiblement horizontal (322, 324).

4. Cuiseur à vapeur selon l'une quelconque des revendications 1 à 3, dans lequel des lignes d'écoulement de vapeur (322) et des orifices de sortie (320, 326) sont prévus le long de la surface de chaque cloison (308), de sorte que la vapeur peut être fournie aux produits alimentaires lorsque de tels produits sont supportés sur les cloisons.

5. Cuiseur à vapeur selon l'une quelconque des revendications 1 à 4, dans lequel lesdites cloisons (308) sont capables de tourner indépendamment.

6. Cuiseur à vapeur selon l'une quelconque des revendications précédentes, dans lequel les cloisons (308) sont en rotation jusqu'à approximativement 90° autour de leurs axes respectifs.

7. Cuiseur à vapeur selon la revendication 1, dans lequel les moyens, pour former, de façon à pouvoir se dégager, les zones de vapeur, comprennent une structure de support en rotation à l'intérieur de la chambre vapeur, comprenant des bras rotatifs qui supportent des produits alimentaires tandis que les produits alimentaires sont soumis à la cuisson à la vapeur.

8. Cuiseur à vapeur selon l'une quelconque des revendications précédentes, dans lequel chaque zone de vapeur successive est plus grande que la zone immédiatement précédente.

9. Cuiseur à vapeur selon l'une quelconque des revendications précédentes, comprenant en outre un orifice d'évacuation (316) au fond du cuiseur à vapeur.

10. Procédé pour faire cuire à la vapeur des produits alimentaires, comprenant
- la mise en place des produits alimentaires à l'intérieur d'une chambre à vapeur ayant une pluralité de structures de support pour produits alimentaires, agencées verticalement et rotatives, chacune étant capable de tourner autour d'un axe depuis une position de cuisson vers une position d'écoulement, la position de cuisson supportant les produits alimentaires pendant la cuisson et la position d'écoulement facilitant le transfert des produits alimentaires depuis la structure de support,
- la cuisson des produits alimentaires à la vapeur en fournissant de la vapeur via l'axe de ladite structure de support, et
- le transfert des produits alimentaires vers une structure de support rotative successive en faisant tourner les structures de support autour de leurs axes vers la position d'écoulement.

11. Procédé selon la revendication 10, dans lequel la structure de support rotative définit une pluralité de zones de vapeur, et chaque zone de vapeur successive est plus grande que la zone immédiatement précédente.

12. Procédé selon l'une ou l'autre des revendications 10 et 11, comprenant en outre le drainage de l'humidité depuis des produits alimentaires avant de pénétrer dans la chambre à vapeur.

13. Procédé selon l'une quelconque des revendications 10 à 12, comprenant en outre l'entraînement des produits alimentaires cuits hors de la chambre à vapeur.

14. Procédé selon l'une quelconque des revendications 10 à 13, comprenant en outre l'alimentation de vapeur depuis le dessus des produits alimentaires.

15. Procédé selon l'une quelconque des revendications 10 à 14, comprenant en outre l'alimentation de vapeur depuis le dessous des produits alimentaires.

16. Procédé selon la revendication 15, comprenant l'alimentation de vapeur depuis le dessus et depuis le dessous des produits alimentaires.

17. Procédé selon la revendication 10, dans lequel la structure de support rotative pour les produits alimentaires comprend un obturateur orienté horizontalement (308).

18. Procédé selon la revendication 10, dans lequel la structure de support rotative pour produits alimentaires est un ensemble propulseur orienté verticalement (97) comportant des pales rotatives (98).
